Europäisches Patentamt

European Patent Office

Office européen des brevets

(11) Numéro de publication: **0 198 780**
A1

## (12) DEMANDE DE BREVET EUROPEEN

(21) Numéro de dépôt: **86440020.5**

(22) Date de dépôt: **14.03.86**

(51) Int. Cl.⁴: **E 01 C 7/10,** C 04 B 28/16,
C 04 B 22/14
// (C04B28/16, 18:04, 18:08)

(30) Priorité: **15.03.85 FR 8504007**

(43) Date de publication de la demande: **22.10.86**
**Bulletin 86/43**

(84) Etats contractants désignés: **BE DE GB**

(71) Demandeur: **A. WEBER, S.A., F-57520 Rouhling (FR)**

(72) Inventeur: **Weber, Adolphe, 79, avenue de la Paix,
F-57520 Rouhling (FR)**

(74) Mandataire: **Nuss, Pierre, 10, rue Jacques Kablé,
F-67000 Strasbourg (FR)**

(54) **Procédé de durcissement rapide de l'anhydrite naturelle.**

㉟ La présente invention concerne un procédé de durcissement rapide de l'anhydrite naturelle.

Procédé caractérisé en ce qu'il consiste essentiellement à ajouter au mélange eau-anhydrite naturelle de l'hémihydrate α sulfate de calcium, en tant que sous-produit de la production d'acide phosphorique, permettant, d'une part, une prise en quelques minutes quelle que soit la température ambiante ou celle des matériaux, et, d'autre part, de réaliser un gunitage à prise pratiquement immédiate.

EP 0 198 780 A1

0198780

A. WEBER, S.A.
57520 ROUHLING (FR)

## Procédé de durcissement rapide de l'anhydrite naturelle

La présente invention concerne le domaine du remplissage et du soutènement dans les mines, en particulier au moyen d'anhydrite naturelle, et a pour objet un procédé de durcissement rapide de l'anhydrite naturelle.

L'anhydrite naturelle, qui est un sulfate de calcium, est utilisé couramment dans les mines comme matériau de remplissage ou de soutènement. Ce matériau qui est extrait de mines peu profondes suivant la méthode de chambres et piliers est abondant et bon marché.

L'anhydrite naturelle durcit lentement en présence d'eau pour se transformer en quelques jours en un béton à très haute résistance à la compression, à savoir de l'ordre de 400 kg/cm$^2$. Pour diminuer le temps de prise de l'anhydrite naturelle, des accélérateurs de prise y sont généralement ajoutés lors de son mélange avec l'eau, ces accélérateurs étant des sulfates de fer ou de potasse, ou d'autres sels.

Cependant, en dépit de l'addition de ces accélérateurs de prise, le temps de prise de l'anhydrite est encore trop long dans le cas de certaines applications minières.

La présente invention a pour but de pallier ces inconvénients.

Elle a, en effet, pour objet un procédé de durcissement rapide de l'anhydrite naturelle caractérisé en ce qu'il consiste essentiellement à ajouter au mélange eau-anhydrite

- 2 -                    0198780

naturelle de l'hémihydrate ∝ sulfate de calcium, en tant que sous-produit de la production d'acide phosphorique, permettant, d'une part, une prise en quelques minutes quelle que soit la température ambiante ou celle des matériaux, et, d'autre part, de réaliser un gunitage à prise pratiquement immédiate.

L'hémihydrate, qui est un sous-produit de la production d'acide phosphorique, est donc d'un bas prix de revient. Ce produit se présente sous forme d'une poudre blanche très fine.

Conformément à une caractéristique de l'invention, l'hémihydrate est additionnée au mélange à une dose comprise entre 10 % et 15 % en poids pour réaliser une prise en un laps de temps compris entre 8 et 10 minutes. Dans le cas d'un dopage, de manière connue, d'anhydrite avec des catalyseurs classiques, la prise ne sera effective qu'après environ 1 à 3 heures.

Selon une autre caractéristique de l'invention, l'hémihydrate est additionnée au mélange d'anhydrite et d'eau à raison de 15 % à 30 % en poids pour obtenir une anhydrite présentant une résistance à la compression d'environ 50 bars après environ 1 heure.

Actuellement, l'addition d'accélérateurs connus ne permet d'atteindre de telles valeurs de durcissement, au mieux, qu'environ 5 à 8 heures après le mélange.

La température ambiante ou celle du massif n'a aucun effet sur le temps de prise d'une anhydrite additionnée de 15 % à 30 % d'hémihydrate ∝ sulfate de calcium, la prise s'effectuant après environ 10 à 15 minutes après le mélange même à 50° C, alors que, dans de telles conditions de température, la même anhydrite additionnée de catalyseur ne fera prise qu'après un temps très long, voire même pas du tout.

Conformément à une autre caractéristique de l'invention, le procédé consiste à mélanger 10 % à 40 % en poids d'hémihydrate avec des cendres volantes et avec 0 % à 20 % en poids d'anhydrite naturelle pour l'obtention d'un matériau à prise rapide pour la formation de barrages, de dames, et autres. Ce mode de réalisation permet l'utilisation de sous-produits de centrales thermiques difficiles à éliminer par ailleurs et d'un très faible prix de revient.

L'invention a également pour objet un matériau obtenu par application d'un procédé décrit ci-dessus caractérisé en ce qu'il est mis en oeuvre pour la réalisation de barrages ou de dames au moyen de coffrages coulissants, ou pour la réalisation de chemins de roulement pouvant être mis en service après environ 20 à 30 minutes après ladite mise en oeuvre.

Le matériau conforme à l'invention est utilisé, de préférence, dans les mines, et est mis en oeuvre par coulée ou par projection. Ce matériau présente un temps de prise ultra-rapide et est d'une grande efficacité quelles que soient les conditions d'utilisation. L'utilisation du matériau conforme à l'invention est particulièrement intéressante pour la réalisation de barrages et de piliers, ainsi que pour la réalisation par projection de portes d'aérage, de revêtements de galeries, etc ...

Bien entendu, l'invention n'est pas limitée aux modes de réalisation décrits. Des modifications restent possibles, notamment du point de vue des proportions des divers éléments, sans sortir pour autant du domaine de protection de l'invention.

0198780

- R E V E N D I C A T I O N S -

1. Procédé de durcissement rapide de l'anhydrite naturelle, caractérisé en ce qu'il consiste essentiellement à ajouter au mélange eau-anhydrite naturelle de l'hémihydrate $\alpha$ sulfate de calcium, en tant que sous-produit de la production d'acide phosphorique, permettant, d'une part, une prise en quelques minutes quelle que soit la température ambiante ou celle des matériaux, et, d'autre part, de réaliser un gunitage à prise pratiquement immédiate.

2. Procédé, suivant la revendication 1, caractérisé en ce que l'hémihydrate est additionnée au mélange à une dose comprise entre 10 % et 15 % en poids pour réaliser une prise en un laps de temps compris entre 8 et 10 minutes.

3. Procédé, suivant la revendication 1, caractérisé en ce que l'hémihydrate est additionnée au mélange d'anhydrite et d'eau à raison de 15 % à 30 % en poids pour obtenir une anhydrite présentant une résistance à la compression d'environ 50 bars après environ 1 heure.

4. Procédé, suivant la revendication 1, caractérisé en ce qu'il consiste à mélanger 10 % à 40 % en poids d'hémihydrate avec des cendres volantes et avec 0 % à 20 % en poids d'anhydrite naturelle pour l'obtention d'un matériau à prise rapide pour la formation de barrages, de dames, et autres.

5. Matériau à prise rapide obtenu par mise en oeuvre du procédé suivant l'une quelconque des revendications 1 à 4, caractérisé en ce qu'il est mis en oeuvre pour la réalisation de barrages ou de dames au moyen de coffrages coulissants, ou pour la réalisation de chemins de roulement pouvant être mis en service après environ 20 à 30 minutes après ladite mise en oeuvre.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | RESEARCH DISCLOSURE, no. 202, février 1981, pages 70-71, no. 20203, Havant, Hampshire, GB; "Building products" * En entier * | 1-4 | C 04 B 28/16<br>C 04 B 22/14<br>E 01 C 7/10 //<br>(C 04 B 28/16<br>C 04 B 18:04<br>C 04 B 18:08<br>E 21 D 11:00<br>E 21 F 15:00 ) |
| Y | US-A-1 986 001 (V. LEFEBURE) * Revendication 1; colonne 1, ligne 36 - colonne 2, ligne 3 * | 1-3 | |
| Y | DE-A-3 204 908 (STEAG AG) * Résumé * | 1,4 | |
| A | DE-A-2 216 039 (KALI UND SALZ AG) * Page 1, paragraphe 1; page 3, revendication 1 * | 1,2,5 | |
| A | DE-C- 415 766 (E. THIRS) | | **DOMAINES TECHNIQUES RECHERCHES (Int. Cl.4)**<br><br>C 04 B 28/00<br>C 04 B 11/00<br>C 04 B 22/00<br>C 04 B 18/00 |
| A | GB-A-2 097 776 (H. HOLTER) | | |
| A | FR-A-2 086 620 (ENTREPRISES ALBERT COCHERY) | | |

Le présent rapport de recherche a été établi pour toutes les revendications

| Lieu de la recherche<br>LA HAYE | Date d'achèvement de la recherche<br>16-06-1986 | Examinateur<br>DAELEMAN P.C.A. |
|---|---|---|